## Europäisches Patentamt
## European Patent Office
## Office européen des brevets

(11) Veröffentlichungsnummer: **0 177 945**
**B1**

(12) **EUROPÄISCHE PATENTSCHRIFT**

(45) Veröffentlichungstag der Patentschrift:
14.12.88

(51) Int. Cl.⁴: **B 23 K 33/00**

(21) Anmeldenummer: **85112784.5**

(22) Anmeldetag: **09.10.85**

(54) Schweissnaht zur Verbindung zweier Dünnbleche.

(30) Priorität: **12.10.84 DE 3437438**

(43) Veröffentlichungstag der Anmeldung:
**16.04.86 Patentblatt 86/16**

(45) Bekanntmachung des Hinweises auf die Patenterteilung:
**14.12.88 Patentblatt 88/50**

(84) Benannte Vertragsstaaten:
**DE FR GB IT SE**

(56) Entgegenhaltungen:
**DE-A-2 448 713**
**US-A-2 354 921**
**US-A-3 115 572**
**US-A-3 407 280**
**US-A-3 515 841**
**US-A-4 187 407**
**US-A-4 427 869**

(73) Patentinhaber: **BAYERISCHE MOTOREN WERKE Aktiengesellschaft, Postfach 40 02 40 Petuelring 130 - AJ- 30, D-8000 München 40 (DE)**

(72) Erfinder: **Brüssow, Gerhard, Situlistrasse 71 a, D-8000 München 45 (DE)**
Erfinder: **Rüger, Alfred, Bodenseestrasse 289, D-8000 München 60 (DE)**
Erfinder: **König, Dieter, Dr., Gailenreutherstrasse 16, D-8000 München 60 (DE)**

(74) Vertreter: **Bücken, Helmut, Bayerische Motoren Werke Aktiengesellschaft Postfach 40 02 40 Petuelring 130 - AJ- 30, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf eine Vorrichtung der im Oberbegriff des 1. Anspruchs angegebenen Art.

Aus der DE-OS-2 653 060 ist eine Kraftfahrzeugtür bekannt, bei welcher das Türinnenblech mit dem Türaußenblech durch Punktschweißung miteinander verbunden ist. Hierzu werden beide Bleche in ihrem Randbereich gebördelt, und zwar derart, daß die optisch sichtbaren Schweißpunkte nicht im geschlossenen Zustand der Tür auf der Türaußenseite liegen. Aufgrund der verwendeten Punktschweißverbindung mit der relativ großen Wärmeentwicklung kann ein Verzug der einzelnen Bleche nicht verhindert werden. Deshalb sind in der DE-OS-2 653 060 auch die gebördelten Blechstücke relativ lang, um zu verhindern, daß der Verzug auf der Türaußenseite in Erscheinung tritt in Form von Wellen.

Daneben ist allgemein bekannt, Innen- und Außenblech von Türen und Klappen im Automobilbau durch Umfalzen des die Türaußenseite bildenden Bleches und anschließendem Verkleben beider Bleche herzustellen. Durch den Kleber wird sowohl die erforderliche Bauteilsteifigkeit also auch ein Korrosionsschutz im Falz erzielt. Durch den Einsatz vorbeschichteter Bleche entfällt heutzutage die Notwendigkeit des Korrosionsschutzes, so daß Klebeverbindungen nicht mehr erforderlich sind. Die weitere Verwendung von Falzverbindungen ist allerdings nach wie vor im Hinblick auf Lackiervorgänge erwünscht, da hierbei weniger Kanten entstehen, an denen der Lackfilm aufgrund der Oberflächenspannung sich äußerst dünn ausbildet, so daß kleinste Lackbeschädigungen direkt zu Korrosion am Blech führen.

Aufgabe der vorliegenden Erfindung ist es, unter Beibehaltung der bekannten Falznähte eine geeignete Schweißnaht vorzuschlagen.

Diese Aufgabe wird erfindungsgemäß durch den ersten Anspruch gelöst.

Aus der US-PS-4 427 829 ist ein Schweißverfahren an gefalzten Blechen zur Herstellung einer Schweißnaht an Türen oder Klappen von Kraftfahrzeugen bekannt, die ein Innen- und Außenblech aufweisen, wobei das die Außenfläche bildende Blech um das die Innenfläche bildende Blech im Randbereich gefalzt ist und die Schweißung von der gefalzten Seite erfolgt. Die Schweißung erfolgt dabei derart, daß nur das umgefalzte Blechstück mit dem umfaßten Innenblechteilstück verschweißt wird, wobei das Außenblech eine optisch glatte Außenfläche behält. Um dies zu erreichen, sind im Bereich der Schweißnaht das Innenblechteilstück und das umgefalzte Außenblechteilstück mit Erhebungen versehen, so daß sich Lufträume bilden. Diese Erhebungen werden dann mit Hilfe von Punktschweißelektroden verschweißt. Der Nachteil dieses Verfahrens besteht darin, daß zusätzliche Arbeitsschritte in der Blechbearbeitung notwendig sind, um diese Erhebungen herzustellen.

Aus der US-PS-2 354 921, insbesondere Fig. 5, ist es bekannt, gefalzte Blechenden mit Hilfe von Lichtbogenschweißverfahren von der Außenseite her zu verbinden. Dabei sind die Schweißparameter so eingestellt, daß die Schweißnaht nur durch zwei Blechteilstücke dringt.

Hierbei handelt es sich aber nicht um Türen und Klappen von Kraftfahrzeugen, auch spielt die Forderung nach einer optisch glatten Außenfläche hierbei keine Rolle, da zum einen die Schweißnaht von der Außenseite her erfolgt und es sich zum anderen um eine doppelte Falzung handelt, da als Anwendungsgegenstand aus dieser US-PS-2 354 921 Behälter zum Transport von hochflüchtigen, explosiven Flüssigkeiten angegeben wird. Ein Hinweis auf die im Anspruch 1 genannten speziellen Schweißverfahren sowie die Anwendung des dort beschriebenen Verfahrens bei der hier vorliegenden Problematik konnte dieser Schrift nicht entnommen werden.

Durch die Erfindung wird der Vorteil erreicht, daß durch die vorgeschlagenen Schweißverfahren ohne zusätzliche Maßnahme an den Blechen verhindert werden kann, daß auf der optisch glatten Außenfläche des Außenbleches eine Schweißnaht bzw. Schweißlinse gebildet wird. Auch wirkt sich der bei den genannten verzugsarmen Schweißverfahren auftretende Verzug nicht auf das Außenblech aus, da durch das Falzen des Außenbleches um das Innenblech eine Art Federelement im gebogenen Außenblechbereich entsteht, das den minimalen Verzug im Schweißnahtbereich auffängt und ihn nicht weiterleitet auf die Blechaußenseite. Auch hat die Beibehaltung der bisherigen Form der Blechteile den Vorteil, daß die bisherigen Werkzeuge und Stanzformen beibehalten werden können.

In den Ansprüchen 2 - 4 werden vorteilhafte an sich bekannte Schweißnahtformen beschrieben.

Hierbei ist zu berücksichtigen, daß üblicherweise vorbeschichtete Bleche zum Einsatz gelangen, so daß ein Korrosionsschutz entfallen kann. Deshalb ist es nicht mehr notwendig, eine durchgehende Naht herzustellen. Je nach geforderter Steifigkeit der Verbindung eignen sich auch einzelne Schweißpunkte oder eine Steppnaht oder nur kurze Schweißnähte in den Kantenbereichen der Bleche.

Nach einer anderen Weiterbildung (Anspruch 5) kann trotz der unterbrochenen Schweißnähte eine 100-%-ige sichere Dichtigkeit dadurch erzielt werden, daß beim Falzen ein Zusatzwerkstoff in den Falz eingelegt wird, der unter der lokalen Wärmeeinwirkung des Schweißens schmilzt und die Fuge sicher verschließt. Ein derartiger Werkstoff ist beispielsweise Lot.

Im folgenden wird die Erfindung anhand drei schematischer Beispiele näher erläutert. In allen drei Beispielen wird ein Innenblech 1 mit einem Außenblech 2 verbunden. Hierzu wird das Außenblech in seinem Randbereich um das Innenblech 1 gefalzt. Aufgrund der Falzung weist das Außenblech im Knickbereich elastische Eigenschaften auf, wodurch bei Anwendung der erfindungsgemäß vorgeschlagenen energiearmen und damit verzugsarmen Schweißverfahren den noch entstehenden Verzug aufgefangen wird. Die Schweißung selbst wird so vorgenommen, daß sich nur der umgefalzte Teil des Außenbleches mit dem Innenblech verbindet. Dadurch ist auf dem Außenblech keinerlei Beeinträchtigung durch die Schweißung festzustellen.

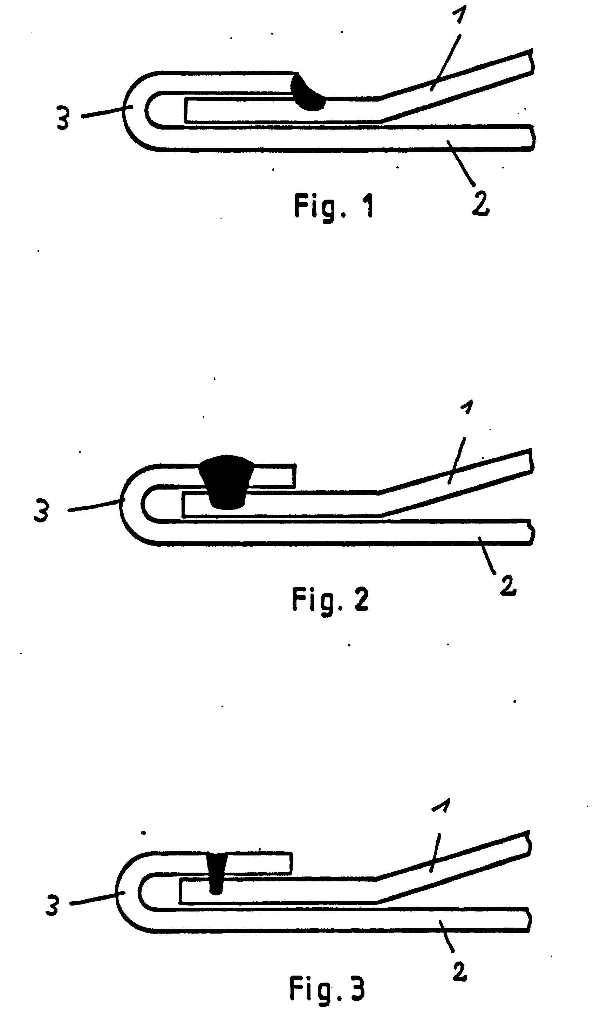

Fig. 1 zeigt die Schweißlinse bei Herstellung durch Mikroplasmaschweißen, Fig. 2 durch MAG-Schweißen und Fig. 3 durch Strahlschweißen.

## Patentansprüche

1. Verwendung von Mikroplasmaschweißen, Kurzzeit-WIG- oder MAG-Schweißen, Laserstrahl- oder Elektronen strahlschweißen zur Herstellung einer Schweißnaht an Türen und Klappen von Kraftfahrzeugen mit einem Innen- und Außenblech, wobei das die Außenfläche bildende Blech um das die Innenfläche bildende Blech im Randbereich gefalzt ist und die Schweißung auf der gefalzten Seite derart erfolgt, daß nur das umgefalzte Blechteilstück mit dem umgefalzten Innenblechteilstück verschweißt wird und die Bleche im Bereich der Schweißung eine ebene Oberfläche aufweisen, so daß das Außenblech eine optisch glatte Außenfläche behält.

2. Verwendung der in Anspruch 1 genannten Schweißverfahren zur Herstellung einer Schweißnaht, die aus einzelnen Schweißpunkten besteht.

3. Verwendung der in Anspruch 1 genannten Schweißverfahren zur Herstellung einer Schweißnaht, die aus unterbrochenen Abschnitten besteht.

4. Verwendung der in Anspruch 1 genannten Schweißverfahren zur Herstellung einer Schweißnaht, bei der die Schweißnähte nur im Kantenbereich der Bleche (1, 2) vorgesehen ist.

5. Verwendung eines leicht schmelzenden Zusatzwerkstoffes in der Falz bei den nach den Ansprüchen 1 - 4 hergestellten Schweißnähten.

## Claims

1. Use of microplasma welding, short-time TIG or MAG welding, laser-beam or electron-beam welding for producing a weld seam on doors and flaps of motor vehicles comprising an inner and outer metal sheet, the sheet constituting the outer surface being folded in the edge region around the sheet constituting the inner surface and the weld being made on the folded side so that only the folded part of the sheet is welded to the folded part of the inner sheet and the sheets have a flat surface in the weld region, so that the outer sheet retains an optically smooth outer surface.

2. Use of the method of welding disclosed in claim 1 for producing a weld seam made up of individual spot welds.

3. Use of the method of welding disclosed in claim 1 for making a weld seam comprising discontinuous portions.

4. Use of the method of welding disclosed in claim 1 for producing a weld seam, in which the weld seams are provided only in the edge region of the sheets (1, 2).

5. Use of a low-melting additional material in the fold in weld seams produced according to claims 1 - 4.

## Revendications

1. Utilisation de soudage par micro-plasma, soudage instantané WIG, ou soudage MAG, rayonnement laser ou faisceau d'électrons pour la réalisation d'un cordon de soudage sur des portières ou des hayons de véhicules automobiles comportant une tôle intérieure et une tôle extérieure, où la tôle constituant la surface extérieure est sertie dans la zone de rive et le soudage est réalisé de telle sorte que seul le tronçon de tôle serti est soudé au tronçon de tôle intérieure sertie et la tôle présente dans la zone de soudage une surface plane de telle sorte qu'elle conserve une surface extérieure optiquement lisse.

2. Utilisation du procédé de soudage cité dans la revendication 1 pour l'obtention d'un cordon de soudage qui est constitué de points de soudage séparés.

3. Utilisation du procédé de soudage selon la revendication 1 pour l'obtention d'un cordon de soudage qui est constitué de sections interrompues.

4. Utilisation du procédé de soudage cité dans la revendication 1 pour l'obtention d'un cordon de soudage selon lequel le cordon de soudage n'est prévu que dans la zone de rive de la tôle (1, 2).

5. Utilisation d'un matériau additionnel fondant facilement dans le joint serti dans les cordons de soudage obtenus selon les revendications 1 à 4.

0 177 945

Fig. 1

Fig. 2

Fig. 3